(19) **Europäisches Patentamt**

**European Patent Office**

**Office européen des brevets**

(11) **EP 1 671 930 A1**

(12) **EUROPEAN PATENT APPLICATION**

(43) Date of publication:
**21.06.2006 Bulletin 2006/25**

(51) Int Cl.:
***C01C 3/16*** (2006.01)

(21) Application number: **04029961.2**

(22) Date of filing: **17.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Lonza AG**
**4052 Basel (CH)**

(72) Inventors:
- **Zur Täschler, Cornelia**
  **3912 Termen (CH)**
- **Willa, Pascal**
  **3945 Getwing (CH)**

(54) **Process for the preparation of ammonium dicyanamide**

(57)   Ammonium dicyanamide (I) of the formula

$$NH_4^+ \, [N(CN)_2]^- \quad \textbf{(I)}$$

is prepared by a process comprising the step of reacting a metal dicyanamide of the formula

$$M^{n+} \, [[N(CN)_2]^-]_n \quad \textbf{(II)}$$

in which $M^{n+}$ denotes a metal cation having $n$ positive charges and $n$ denotes an integer from 1 to 3, with an ammonium salt of the formula

$$[NH_4^+]_m \, X^{m-} \quad \textbf{(III)}$$

in which $X^{m-}$ denotes an inorganic anion having $m$ negative charges and $m$ denotes an integer from 1 to 3, to form ammonium dicyanamide (**I**) and a metal salt of the formula

$$[M^{n+}]_m \, [X^{m-}]_n \quad \textbf{(IV)}$$

in which M, X, $m$ and $n$ have the above meanings, wherein the reaction is performed in a solvent system comprising a non-aqueous solvent and optionally water.

EP 1 671 930 A1

## Description

The present invention refers to a process for the preparation of ammonium dicyanamide.

Ammonium dicyanamide can be used in solid propellant mixtures for gas generators (WO 99/48843) or compositions for eliminating or bleaching mould (WO 97/00933).

US 2,562,869 A describes the preparation of ammonium dicyanamide by reacting calcium dicyanamide and ammonium sulfate in water. The co-formed calcium sulfate precipitates. After removing the precipitate, a solution of ammonium dicyanamide is obtained. It is explicitly stated that this result was impossible to achieve when sodium dicyanamide was employed as starting material.

Frankel et al. *J Org. Chem.* **1963,** 28(9), 2428-2431 describes the preparation of ammonium dicyanamide by reacting barium dicyanamide and ammonium sulfate in water. Like calcium sulfate, the co-formed barium sulfate immediately precipitates. The precipitate is filtered off and the filtrate is concentrated *in vacuo* to afford ammonium dicyanamide with a melting point of 131 °C in a yield of 80%.

Jürgens et al. *Inorg. Chem.* **2002**, *41*(19), 4849-4851 describes the preparation of ammonium dicyanamide through ion exchange in aqueous solution starting from sodium dicyanamide and ammonium chloride. First, a cation exchange resin is loaded with ammonium ions by contacting the resin with an aqueous ammonium chloride solution. Then, an aqueous solution of sodium dicyanamide is passed over the resin. Exchange of sodium ions with ammonium ions yields a solution of ammonium dicyanamide. The disadvantage is that the use of an ion exchange resin is necessary to avoid the formation of a solution of ammonium dicyanamide in water which also contains sodium chloride.

It is an object of the present invention to provide a process for the preparation of ammonium dicyanamide from a metal dicyanamide wherein the co-formed metal salt precipitates from the reaction mixture independent of the metal employed.

This object is achieved by the process of claim 1.

It was found that when ammonium dicyanamide is prepared from a metal dicyanamide in a solvent system comprising a non-aqueous solvent, the formed ammonium dicyanamide stays in solution whereas the co-formed metal salt precipitates and thus can be easily separated.

The process of the present invention for the preparation of ammonium dicyanamide of the formula

$$NH^+_4 \, [N(CN)_2]^- \qquad \textbf{(I)}$$

comprises the step of reacting a metal dicyanamide of the formula

$$M^{n+} \, [[N(CN)_2]^-]_n \qquad \textbf{(II)}$$

in which $M^{n+}$ denotes a metal cation having n positive charges and n denotes an integer from 1 to 3, with an ammonium salt of the formula

$$[NH^+_4]_m \, X^{m-} \qquad \textbf{(III)}$$

in which $X^{m-}$ denotes an inorganic anion having *m* negative charges and *m* denotes an integer from 1 to 3, to form ammonium dicyanamide (I) and a metal salt of the formula

$$[M^{n+}]_m \, [X^{m-}]_n \qquad \textbf{(IV)}$$

in which M, X, *m and n* have the above meanings, wherein the reaction is performed in a solvent system comprising a non-aqueous solvent and, optionally, water.

The metal M can be any metal which can form metal cations $M^{n+}$ having a positive charge from 1 to 3. Preferred metals are alkali metals such as lithium, sodium and potassium and alkaline earth metals such as calcium, strontium and barium. More preferred metals are alkali metals. The most preferred metal is sodium.

The inorganic anion $X^{m-}$ can be any inorganic anion having a positive charge from 1 to 3. Examples of inorganic anions $X^{m-}$ are hydroxide, carbonate, hydrogen carbonate, cyanide, cyanate, rhodanide, nitrate, nitrite, borate, oxyphosphor anions such as phosphate, hydrogen phosphate, phosphite, hydrogen phosphite and diphosphate, sulfide, hydrogen sufide, oxysulfur anions such as sulfate, hydrogen sulfate, thiosulfate, sulfite, hydrogen sulfite and thiosulfite, halogenides such as fluoride, chloride, bromide and iodide, halogenates such as chlorate, bromate and iodate.

Preferred inorganic anions $X^{m-}$ are selected from the group consisting of sulfate, nitrate, carbonate, phosphate and chloride. More preferred inorganic anions are selected from the group consisting of sulfate, carbonate and chloride. Most preferred inorganic anions are sulfate and chloride.

The solvent system comprising a non aqueous solvent and optionally water can be selected from the group consisting of non-aqueous solvents, mixtures of non-aqueous solvents and mixtures of one or more non-aqueous solvents with water.

Any non aqueous solvents which are inert under the reaction conditions can be used.

Preferably the non-aqueous solvent is a polar organic solvent. Examples of polar organic solvents are $C_{1-6}$-alkanols, aliphatic ketones of the formula $R^1R^2CO$ wherein $R^1$ and $R^2$ are equal or different and are $C_{1-4}$-alkyl, aliphatic $C_{2-6}$nitriles, aliphatic amides of the formula $R^3CO\text{-}NR^4R^5$ wherein $R^3$, $R^4$ and $R^5$ are equal or different and are hydrogen or methyl, halogenated $C_{1-4}$-alkanes, esters of the formula $R^6CO\text{-}OR^7$ wherein $R^7$ and $R^6$ are equal or different and are $C_{1-5}$-alkyl and $R^6$ can further denote hydrogen, cyclic ethers or ethers of the $R^8\text{-}O\text{-}R^9$ wherein $R^8$ and $R^9$ are equal or different

and are $C_{1-4}$-alkyl, dimethyl sulfoxide, sulfolane, hexamethylphosphoramide, 1-methyl-2-pyrrolidinone and 2-pyrrolidinone.

Examples of $C_{1-6}$-alkanols are methanol, ethanol, propanol, 2-propanol (isopropanol), butanol, 2-methyl-1-propanol (isobutanol), 2-butanol, *tert*-butanol, pentanol, hexanol and cyclohexanol.

Examples of aliphatic ketones of the formula $R^1R^2CO$, wherein $R^1$ and $R^2$ are equal or different and are $C_{1-4}$-alkyl, are acetone, 2-butanone (ethyl methyl ketone), 3-pentanone (diethyl ketone), 3,3-dimethyl-2-butanone (*tert*-butyl methyl ketone), 2-methyl-3-pentanone (ethyl isopropyl ketone) and 4-methyl-2-pentanone (isobutyl methyl ketone).

Examples of aliphatic $C_{2-6}$-nitriles are acetonitrile, propionitrile, butyronitrile, isobutyronitrile, valeronitrile and hexanenitrile.

Examples of aliphatic amides of the formula $R^3CO-NR^4R^5$, wherein $R^3$, $R^4$ and $R^5$ are equal or different and are hydrogen or methyl, are formamide, acetamide, N-methyl-formamide, *N*-methylacetamide, *N,N*-dimethylformamide and *N,N*-dimethylacetamide.

Examples of esters of the formula $R^6CO-OR^7$, wherein $R^7$ and $R^6$ are equal or different and are $C_{1-5}$-alkyl and $R^6$ can further denote hydrogen, are methyl formate, ethyl formate, methyl acetate, ethyl acetate, propyl acetate, isopropyl acetate, butyl acetate, isobutyl acetate, methyl propionate, methyl butyrate and ethyl pentanoate.

Examples of cyclic ethers are tetrahydrofuran, tetrahydropyran and dioxane. Examples of ethers of the formula $R^8-O-R^9$, wherein $R^8$ and $R^9$ are equal or different and are $C_{1-4}$-alkyl, are diethyl ether, butyl methyl ether, tert-butyl methyl ether, butyl ethyl ether, diisopropyl ether and dipropyl ether.

Halogenated $C_{1-4}$-alkanes can be mono- or polyhalogenated $C_{1-4}$-alkanes. Examples of halogenated $C_{1-4}$-alkanes are dichloromethane, chloroform, 1,2-dichloroethane, 1,2-dibromoethane, 1-bromo-2-chloroethane, 1,2-dichloropropane, 1,2-dichlorobutane and 1,2-dibromobutane.

More preferably, the non aqueous solvent is selected from the group consisting of $C_{1-4}$-alkanols, aliphatic ketones of the formula $R^1R^2CO$ wherein $R^1$ and $R^2$ are equal or different and are $C_{1-3}$-alkyl, aliphatic $C_{2-3}$-nitriles, aliphatic amides of the formula $R^3CO-NR^4R^5$ wherein $R^3$, $R^4$ and $R^5$ are equal or different and are hydrogen or methyl, halogenated $C_{1-2}$-alkanes, cyclic ethers or ethers of the formula $R^8-O-R^9$ wherein $R^8$ and $R^9$ are equal or different and are $C_{1-3}$-alkyl, dimethyl sulfoxide, sulfolane, 1-methyl-2-pyrrolidinone and 2-pyrrolidinone.

Even more preferably the non-aqueous solvent is selected from the group consisting of methanol, ethanol, isopropanol, *tert*-butanol, acetone, acetonitrile, *N,N* dimethylformamide, N,N-dimethylacetamide, tetrahydrofuran, dioxane, dimethyl sulfoxide, sulfolane and 1-methyl-2-pyrrolidinone.

Most preferably, the non-aqueous solvent is methanol.

Preferably, the water content in the solvent system is below 40% by weight, more preferably it is below 20% by weight, even more preferably it is below 10% by weight. Most preferably, the water content is below 2% by weight.

The reaction can be carried out at any suitable temperature depending also on the solvent system used. Preferably, the reaction is carried out at 5 to 70 °C, more preferably at 10 to 35 °C.

Metal dicyanamides (II) can be prepared by known procedures. For example, sodium dicyanamide can be prepared from cyanamide und sodium hydroxide und cyanogen chloride (WO 2000/46151) or from cyanogen chloride und sodium hydroxide and aqueous ammonia (US 3,429,658). Lithium, potassium and rubidium dicyanamide can be prepared from sodium dicyanamide and the respective alkali metal chloride (Irran et al. *Chem. Europ. J.* **2001,** 7(24), 5372-5381, Purdy et al. *Polyhedron* **1997**, *16*(20), 3671-3679). Calcium dicyanamide can be prepared from calcium cyanamide and cyanogen chloride (US 2,562,869).

The reaction can be carried out at any suitable temperature depending also on the solvent system used. Preferably, the reaction is carried out at 5 to 70 °C, more preferably at 10 to 35 °C. Preferably, the reaction is monitored by infrared spectroscopy and stopped when the metal dicyanamide **(II)** has disappeared. The formed ammonium dicyanamide **(I)** is soluble in the reaction mixture, whereas the co-formed metal salt **(IV)** is insoluble. The solids can be removed for example by filtration or centrifugation yielding a solution of ammonium dicyanamide (I) in the solvent system comprising a non-aqueous solvent. The solution can be evaporated to obtain ammonium dicyanamide having a content of above 70% by weight of ammonium dicyanamide, preferably of above 75% by weight. The obtained ammonium dicyanamide can be further purified by crystallization. Alternatively, ammonium dicyanamide can be directly, or after solvent exchange, crystallized from the above solution.

## Example 1

Preparation of ammonium dicyanamide using ammonium chloride

A suspension of sodium dicyanamide (66.74 g, 0.75 mol) and ammonium chloride (48.15 g, 0.90 mol) in methanol (760 mL, 600 g) was stirred at 25 °C for 24 h. The suspension was filtered and the filtrate was concentrated at 30 °C and 15 mbar to yield ammonium dicyanamide as white powder (68.5 g, content: 75.2% (w/w), yield: 82%).

## Example 2

Preparation of ammonium dicyanamide using ammonium sulfate

A suspension of sodium dicyanamide (44.50 g, 0.50 mol) and ammonium sulfate (36.35 g, 0.28 mol) in methanol (810 mL, 640 g) was stirred at 20 °C for 65 h. The suspension was filtered and the filtrate was concentrated at 20 °C and 10 mbar to yield ammonium dicyanamide was a white powder (39.62 g, content: 95.8% (w/w), yield: 90%).

**Claims**

1. A process for the preparation of ammonium dicyanamide of the formula

$$NH^+_4 \, [N(CN)_2]^- \qquad \text{(I)}$$

comprising the step of reacting a metal dicyanamide of the formula

$$M^{n+} \, [[N(CN)_2^-]]_n \qquad \text{(II)}$$

in which $M^{n+}$ denotes a metal cation having n positive charges and n denotes an integer from 1 to 3, with an ammonium salt of the formula

$$[NH^+_4]_m \, X^{m-} \qquad \text{(III)}$$

in which $X^{m-}$ denotes an inorganic anion having $m$ negative charges and $m$ denotes an integer from 1 to 3,
to form ammonium dicyanamide (I) and a metal salt of the formula

$$[M^{n+}]_m \, [X^{m-}]_n \qquad \text{(IV)}$$

in which M, X, $m$ and n have the above meanings, wherein the reaction is performed in a solvent system comprising a non-aqueous solvent and optionally water.

2. The process of claim 1 wherein M is an alkali or an alkaline earth metal.

3. The process of claim 1 or 2 wherein the non-aqueous solvent is a polar organic solvent.

4. The process of any of claims 1 to 3 wherein the water content in the solvent system is below 40% by weight.

5. The process of claim 4 wherein the water content is below 20% by weight.

**European Patent Office**

**EUROPEAN SEARCH REPORT**

Application Number

EP 04 02 9961

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | JUERGENS BARBARA ET AL: "Transformation of Ammonium Dicyanamide into Dicyandiamide in the Solid" INORGANIC CHEMISTRY, vol. 41, no. 19, 2002, pages 4849-4851, XP002327245 * the whole document * | 1-5 | C01C3/16 |
| X,D | FRANKEL MILTON B. ET AL: "Derivatives of Dicyanamide" JOURNAL OF ORGANIC CHEMISTRY, vol. 28, no. 9, 1963, pages 2428-2431, XP002327246 * page 2428, left-hand column * * page 2429, left-hand column * | 1-5 | |
| X,D | US 2 562 869 A (NAGY DANIEL E) 31 July 1951 (1951-07-31) * column 2, lines 16-30 * * column 5, lines 55-62 * | 1-5 | |
| A | US 3 279 885 A (SPRAGUE JAMES W ET AL) 18 October 1966 (1966-10-18) * column 1, line 58 - column 2, line 31 * | 1,3-5 | TECHNICAL FIELDS SEARCHED (Int.Cl.7) C01C |
| A | US 2 927 842 A (FELDMAN ALLAN M ET AL) 8 March 1960 (1960-03-08) * column 2, lines 8-20 * | 1,3-5 | |
| A | SPRAGUE JAMES W ET AL: "The Synthesis and Infrared and Nuclear Magnetic Resonance Spectra of Ammonium Dicyanamide" THE JOURNAL OF PHYSICAL CHEMISTRY, vol. 68, no. 2, 1964, pages 431-433, XP002327247 * page 431, left-hand column - page 432, right-hand column * | 1 | |

-/--

The present search report has been drawn up for all claims

| Place of search | Date of completion of the search | Examiner |
|---|---|---|
| Munich | 4 May 2005 | Besana, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 671 930 A1

**European Patent Office**

**EUROPEAN SEARCH REPORT**

Application Number

EP 04 02 9961

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 1 218 470 A (VOSSELLER GEORGE V) 6 January 1971 (1971-01-06) * the whole document * | | |

TECHNICAL FIELDS SEARCHED (Int.Cl.7)

The present search report has been drawn up for all claims

| Place of search | Date of completion of the search | Examiner |
|---|---|---|
| Munich | 4 May 2005 | Besana, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 9961

This annex lists the patent family members relating to the patent documents cited in  the above-mentioned European search report.
The members are as contained in the European Patent Office EDP file on
The European Patent Office is in no way liable for these particulars which are merely  given for the purpose of information.

04-05-2005

| Patent document cited in search report | | Publication date | Patent family member(s) | Publication date |
|---|---|---|---|---|
| US 2562869 | A | 31-07-1951 | NONE | |
| US 3279885 | A | 18-10-1966 | NONE | |
| US 2927842 | A | 08-03-1960 | NONE | |
| GB 1218470 | A | 06-01-1971 | NONE | |

EPO FORM P0459